# EUROPEAN PATENT APPLICATION

(11) **EP 0 926 413 A2**
(43) Date of publication of application: **30.06.1999**
(21) Application number: 98308887.3
(22) Date of filing: 30.10.1998
(51) Int. Cl.: F16L 9/147

(54) **Fluid transporting pipes and methods of making them**

(30) Priority: 22.12.1997 GB 9727120
(71) Applicant: DRAFTEX INDUSTRIES LIMITED, Edinburgh EH2 3AP, Scotland (GB)
(72) Inventor: Pignatel, Jerome, 44240 la Chapelle-sur-Erdre (FR)
(74) Representative: Foster, David Martyn

(57) **Abstract**

A fuel pipe, such as for a motor vehicle, comprises an inner tubular layer (10) of polymeric material covered by an homogeneous layer 11 of metallic material to provide impermeability to the fuel. An outer tubular layer (14), also of polymeric material, may be applied, mainly for mechanical protection purposes. The polymeric material of the inner layer (10) incorporates metallic particles. These improve the compatability of the polymeric material with the metallic material of the layer (11). The improved compatability prevents the formation of voids between the inner layer (10) and the metallic layer (11) into which fuel may seep. Differential expansion of the layers in response to temperature changes can "pump" such fuel from the voids to a leakage point at the end of the pipe. The use of an expensive adhesive, and a corresponding additional manufacturing step, is thus avoided.

## Description

The invention relates to a fluid-transporting pipe, comprising a first tubular layer of a polymeric material and a second tubular layer on the outside thereof and of homogeneous metallic material, the first tubular layer incorporating dispersed metallic particles. The invention also relates to a method of manufacturing a fluid-transporting pipe, comprising the steps of forming a first tubular layer of a polymeric material, forming on the outside thereof a second layer of homogeneous metallic material, and incorporating dispersed metallic particles in the polymeric material.

Such a pipe and method are shown in DE-A-2 614 035. In this arrangement, a tubular metallic inner layer has superimposed on it an intermediate layer of polymeric material. Metallic particles are incorporated in the polymeric material to provide a surface which mechanically inter-engages with polymeric material of a further layer superimposed on the outside of the intermediate layer. However, the invention is concerned with the join between a polymeric layer and a metallic layer.

According to the invention, therefore, the pipe as first set forth above is characterised in that the metallic particles in the first layer improve its compatability with the second tubular layer, and in that the metal of the second tubular layer and the metallic particles have low melting points to cause at least partial fusion upon the application of heat.

Further according to the invention, the method as first set forth above is characterised in that the metallic particles are selected to improve the compatability of the first layer with the metallic material of the second layer, in that the metal of the second tubular layer and the metallic particles have low melting points, and by the step of applying heat to cause at least partial fusion of the metal of the second tubular layer with the metallic particles.

Fuel pipes embodying the invention, for use in vehicles, and methods according to the invention for making such pipes, will now be described, by way of example only, with reference to the accompanying diagrammatic drawings in which:
Figure 1 is a cross-section through one of the pipes on the line I-I of Figure 2;
Figure 2 is a cross-section on the line II-II of Figure 1; and
Figure 3 corresponds to Figure 1 but shows a modification.

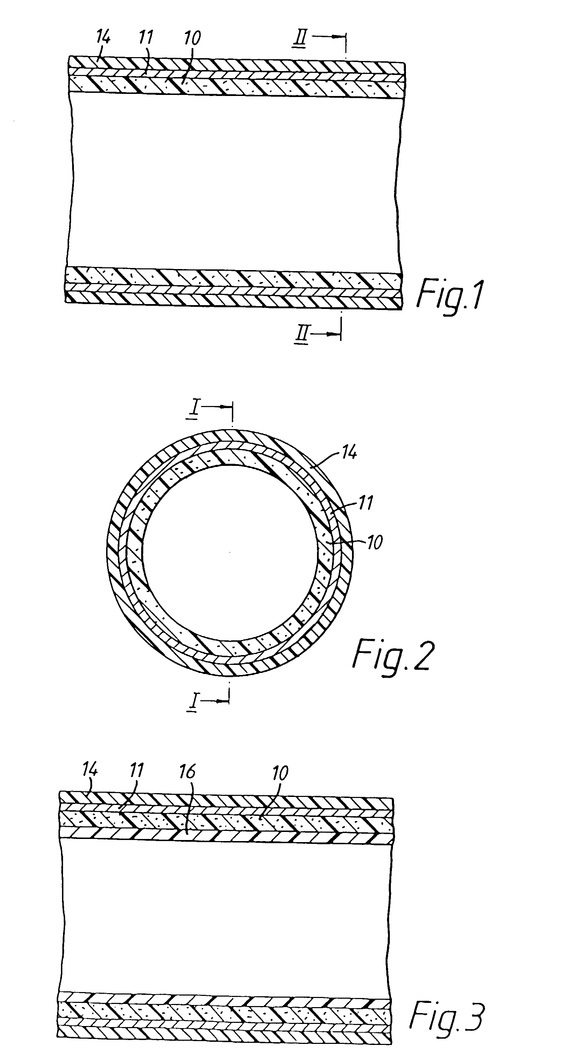

The fuel pipe shown in Figure 1 comprises an inner tubular layer 10 of polymeric material such as an elastomer, a thermoplastic, or a thermoplastic elastomer. An homogeneous tubular metal layer 11 surrounds the inner layer 10. Finally, an external tubular layer 14 of suitable material, such as rubber, a thermoplastic, or a thermoplastic elastomer is applied.

The inner layer 10 provides good impermeability to and compatability with hydrocarbon fuel. However, the material of the inner layer 10 may not provide complete impermeability, and this is the purpose of the homogeneous metal layer 11. The main purpose of the outer layer 14 is to protect the pipe from damage by mechanical impacts. However, the outer layer is optional.

It is important that good bonding is achieved between the metal layer 11 and the polymeric layer 10. If satisfactory bonding is not achieved, there will be small voids between these two layers and these voids may become filled or partially filled by small amounts of fuel passing from the interior of the pipe through the polymeric layer 10. Changes in ambient temperature applied to the pipe in use will result in differential expansion of the layers 10 and 11, causing a "pumping" action which can pump the fuel in these voids along the length of the pipe to an end thereof where it may leak, causing danger of fire.

In order to provide good bonding between the polymeric material of the layer 10 and the metal layer 11, it is therefore proposed to introduce metallic articles into the polymeric material forming the layer 10. The presence of these metallic particles ensures satisfactory compatability between the polymeric material of the layer 10 and the metal of the layer 11, resulting in satisfactory adhesion and the prevention of the voids.

The homogeneous metal layer 11 may be applied in any suitable way. Examples of suitable methods are disclosed in our copending United Kingdom patent application No. 9718480.8. In the specification of that application, it is disclosed how the metal layer 11 may be formed by means of a ribbon of the metal which is wound spirally around the outside of the layer 10 with each turn partially overlapping the previous turn. The ribbon is made of a metal or a metal alloy having a low melting point, for example a melting point within the region 90° to 300°C. Upon the application of a suitably high temperature, the metal of the ribbon melts so as to fuse the metal ribbon to itself within the overlapping region, thereby producing the homogeneous tubular layer. The applied heat may be specifically applied or it may be generated during the process of forming (such as by extrusion) the external layer 14. Instead, a length of low melting point metal foil can be wrapped around a corresponding length of the layer 10 so as to produce a longitudinally extending overlapping seam which is melted using one of the methods just described in order to produce the desired homogeneous metal layer. In a further method, the layer 11 may be produced by extrusion of a suitable low-melting point metal. The extrusion process may be a co-extrusion process also involving extrusion of the layers 10 and 14. The metal layer 11 may be applied alternatively by spraying low-melting point metal onto the outside of the layer 10. Other methods are also possible.

Advantageously, the metallic powder introduced into the layer 10 has a melting point which is sufficiently low to ensure good adhesion with the metal of the layer 11.

In this way, therefore, the use of a separate adhesive to ensure tight fitting, and the absence of voids, between the inner tubular layer 10 and the metallic layer 11 is avoided. Therefore, the cost of such adhesive and the cost of the corresponding additional application step are also avoided.

If desired, the material of the outer layer 14 can also incorporate the metallic particles.

In the modified pipe shown in Figure 3, a further polymeric tubular layer 16 is formed within and on the tubular layer 10. The material of the layer 16 is the same as that of the layer 10 except that the layer 16 does not incorporate any metallic particles. Because the layer 16 is the same as the material of the layer 10, except for the particles, it will be substantially compatible with the layer 10 and will bond well with it. The absence of the metallic particles from the inner layer 16 ensures that the layer in contact with the fuel does not have its electrical resistance reduced by the presence of metallic particles.

The incorporation of the low melting point metallic layer 11, enables the pipe to be bent into a required configuration after the application of heat, the pipe then retaining this configuration after cooling.

## Claims

1. A fluid-transporting pipe, comprising a first tubular layer of a polymeric material (10) and a second tubular layer (11) on the outside thereof and of homogeneous metallic material, the first tubular layer incorporating dispersed metallic particles, characterised in that the metallic particles in the first layer improve its compatability with the second tubular layer, and in that the metal of the second tubular layer (11) and the metallic particles have low melting points to cause at least partial fusion upon the application of heat.

2. A pipe according to claim 1, characterised in that the second tubular layer (11) is rendered homogeneous by heating.

3. A pipe according to claim 2, characterised in that the second tubular layer (11) comprises a strip of metallic material wrapped around the first layer and having overlapping areas which are fused together in situ by melting of the metallic material.

4. A pipe according to claim 2, characterised in that the second tubular layer (11) comprises a layer of metallic material which is applied in a molten or partially molten state and solidifies on the first layer (10).

5. A pipe according to any one of claims 2 to 4, characterised in that the metallic material of the second layer has a melting point which is at a lower temperature than that which damages the first layer (10).

6. A pipe according to any preceding claim, characterised by a third tubular layer (14) on the outside of the second layer (11).

7. A pipe according to claim 6, characterised in that the third layer (14) is a layer of polymeric material.

8. A pipe according to claim 7, characterised in that the third tubular layer (14) incorporates metallic particles to improve its compatability with the second tubular layer (11).

9. A pipe according to any preceding claim, characterised by an inner tubular layer (16) inside and on the first tubular layer (10), the inner tubular layer (16) being of polymeric or similar material devoid of metallic particles.

10. A method of manufacturing a fluid-transporting pipe, comprising the steps of forming a first tubular layer (10) of a polymeric material, forming on the outside thereof a second layer (11) of homogeneous metallic material, and incorporating dispersed metallic particles in the polymeric material, characterised in that the metallic particles are selected to improve the compatability of the first layer (10) with the metallic material of the second layer, in that the metal of the second tubular layer (11) and the metallic particles have low melting points, and by the step of applying heat to cause at least partial fusion of the metal of the second tubular layer (11) with the metallic particles.

11. A method according to claim 10, characterised by the step of rendering the second tubular layer (11) homogeneous by heating.

12. A method according to claim 11, characterised in that the step of forming the second layer (11) comprises the step of wrapping a strip of metallic material around the first layer (10) with overlapping areas, and fusing the overlapping areas together in situ by melting of the metallic material.

13. A method according to claim 11, characterised in that the step of forming the second tubular layer (11) comprises the step of applying a layer of metallic material in a molten or partially molten state and allowing it to solidify on the first layer (10).

14. A method according to any one of claims 11 to 13, characterised in that the metallic material of the second layer (11) has a melting point which is at a lower temperature than that which damages the first layer (10).

15. A method according to any one of claims 10 to 14, characterised by the step of forming a third tubular layer (14) on the outside of the second layer (11).

16. A method according to claim 15, characterised in that the third layer (14) is a layer of polymeric material.

17. A method according to claim 16, characterised in that the third tubular layer (14) incorporates metallic particles to improve its compatability with the second tubular layer (11).

18. A method according to any one of claims 10 to 19, characterised by the step of forming an inner tubular layer (16) inside and on the first tubular layer (11), the inner tubular layer (16) being of polymeric or similar material devoid of metallic particles.
